# EUROPEAN PATENT APPLICATION

(11) **EP 4 502 069 A1**
(43) Date of publication of application: **05.02.2025**
(21) Application number: 23780901.7
(22) Date of filing: 30.03.2023
(51) Int. Cl.: C08L 83/07, C08K 3/013, C08K 5/5419, C08L 83/05

(54) **CURABLE SILICONE COMPOSITION**

(30) Priority: 31.03.2022 JP 2022060384
(71) Applicant: Dow Toray Co., Ltd., Tokyo 140-8617 (JP)
(72) Inventor: YAMAZAKI, Ryosuke, Ichihara-shi, Chiba 299-0108 (JP); KOMEDA, Yutaka, Ichihara-shi, Chiba 299-0108 (JP); ENDO, Hisayuki, Ichihara-shi, Chiba 299-0108 (JP); MIZUNO, Haruna, Ichihara-shi, Chiba 299-0108 (JP)
(74) Representative: Murgitroyd & Company
(86) International application number: PCT/JP2023/013224
(87) International publication number: WO 2023/190893

(57) **Abstract**

The present invention relates to a curable silicone composition containing at least (A) an organopolysiloxane resin having at least two aliphatic unsaturated monovalent hydrocarbon groups per molecule, (B) an organopolysiloxane having at least two silicon-bonded hydrogen atoms per molecule, (C) a bis(alkynyloxysilyl)alkane represented by the general formula: (wherein R¹ is independently an alkynyl group having 5 to 12 carbon atoms; R² is independently an alkyl group having 1 to 3 carbon atoms or a hydrogen atom; R³ is independently an alkyl group having 1 to 3 carbon atoms; a is independently 1, 2, or 3; b is independently 0, 1, or 2; a + b is 2 or 3; and n is an integer from 2 to 20), and (D) a platinum group metal-based hydrosilylation catalyst. The present composition provides the advantage that, when an organic solvent used in the preparation of the composition is removed, removal of the hydrosilylation reaction inhibitor along with the organic solvent is suppressed, and thus there is little change in curability and storage stability.

## Description

### TECHNICAL FIELD

The present invention relates to a curable silicone composition.

### BACKGROUND ART

It is well known that acetylene alcohols such as 2-methyl-3-butyn-2-ol, 3,5-dimethyl-1-hexyn-3-ol, 1-ethynyl-cyclohexan-1-ol, and the like are blended with a curable silicone composition that is cured via a hydrosilylation reaction between a monovalent hydrocarbon group having an aliphatic unsaturated bond and a silicon-bonded hydrogen atom in order to control the curability of the composition. It is also well known that a silane compound obtained by silylating the acetylene alcohol (Patent Documents 1 to 3) or an organosiloxane obtained by siloxylating the acetylene alcohol (Patent Documents 4 and 5) can be blended in order to sufficiently suppress the hydrosilylation reaction during storage of the composition and to rapidly cure the composition by heating.

However, when these silane compounds obtained by silylating acetylene alcohols or organosiloxanes obtained by siloxylating acetylene alcohols are blended as a hydrosilylation reaction inhibitor in a hot-melt curable silicone composition such as those disclosed in Patent Documents 6 and 7, there are problems in that when the organic solvent used to prepare the composition is removed, a portion or all of the hydrosilylation reaction inhibitor is removed with the organic solvent, and when the composition is subjected to hot-melt mixing or thermoforming, a portion or all of the hydrosilylation reaction inhibitor volatilizes, causing changes in the curability and storage stability of the resulting hot-melt curable silicone composition.

On the other hand, Patent Document 8 discloses a bis(alkynyloxysilyl)alkane, and Patent Document 9 discloses a curable silicone composition containing this compound. However, Patent Documents 8 and 9 make no mention nor suggestion of bis(alkynyloxysilyl)alkanes further having an alkoxy group or hydroxyl group (silanol group) bonded to a silicon atom. Furthermore, Patent Documents 8 and 9 make no mention nor suggestion of the incorporation of a bis(alkynyloxysilyl)alkane as a hydrosilylation reaction inhibitor in a hot-melt type curable silicone composition.

### RELATED ART DOCUMENTS

### Patent Documents

Patent Document 1: Japanese Unexamined Patent Application Publication S59-133252
Patent Document 2: Japanese Unexamined Patent Application Publication S61-000261
Patent Document 3: Japanese Unexamined Patent Application Publication S64-011160
Patent Document 4: Japanese Unexamined Patent Application Publication S52-093468
Patent Document 5: Japanese Unexamined Patent Application Publication S64-051466
Patent Document 6: Japanese Unexamined Patent Application Publication 2007-308542
Patent Document 7: Japanese Unexamined Patent Application Publication 2021-107550
Patent Document 8: Japanese Unexamined Patent Application Publication H4-036292
Patent Document 9: Japanese Unexamined Patent Application Publication H4-161459

### SUMMARY OF THE INVENTION

### PROBLEM TO BE SOLVED BY THE INVENTION

An object of the present invention is to provide a curable silicone composition in which a hydrosilylation reaction inhibitor is prevented from being partially or completely removed along with the organic solvent used to prepare the curable silicone composition when the organic solvent is removed, and in which the hydrosilylation reaction inhibitor is prevented from being partially or completely volatilized when the composition is subjected to hot-melt mixing or thermoforming, and which exhibits minimal change in curability and storage stability.

### MEANS FOR SOLVING THE PROBLEM

The curable silicone composition of the present invention contains at least: a curable silicone composition, comprising at least:
(A) an organopolysiloxane resin having at least two aliphatic unsaturated monovalent hydrocarbon groups in one molecule, containing siloxane units expressed by the formula: RSiO_{3/2} (where R is a monovalent hydrocarbon group which may or may not contain an aliphatic unsaturated group) and/or siloxane units expressed by the formula: SiO_{4/2}, in an amount of at least 20 mol % of all siloxane units constituting component (A);
(B) an organopolysiloxane having at least two silicon atom-bonded hydrogen atoms in a molecule;
(C) a bis(alkynyloxysilyl)alkane expressed by the general formula: 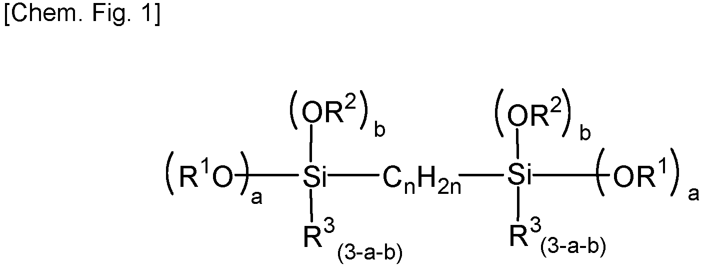 (where R¹ independently represents an alkynyl group having 5 to 12 carbon atoms, R² independently represents an alkyl group having 1 to 3 carbon atoms or a hydrogen atom, R³ independently represents an alkyl group having 1 to 3 carbon atoms, "a" independently represents 1, 2, or 3, "b" independently represents 0, 1, or 2, and "a + b" is 2 or 3, and "n" represents an integer from 2 to 20); and
(D) a platinum group metal-based hydrosilylation catalyst;
   wherein the amount of component (B) is such that there are 0.1 to 20 moles of silicon-bonded hydrogen atoms in component (B) per mole of aliphatic unsaturated hydrocarbon groups in component (A); the amount of component (C) is 10 to 5,000 ppm by mass relative to the combined amount of components (A) through (D); and the amount of component (D) is such that the amount of platinum-based metal is 0.01 to 1,000 ppm by mass relative to the combined amount of components (A) through (D).

The component (A) is preferably an organopolysiloxane resin expressed by the average unit formula:

(R⁴₃SiO_{1/2})_{d}(R⁵₂SiO_{2/2})ₑ(R⁵SiO_{3/2})_{f}(SiO_{4/2})_{g}(R⁶O_{1/2})ₕ

(In the formula, each R⁴ is independently a monovalent hydrocarbon group having 1 to 12 carbon atoms, with the proviso that at least two of all R⁴s in one molecule are aliphatic unsaturated hydrocarbon groups, each R⁵ is independently a monovalent hydrocarbon group having 1 to 12 carbon atoms and having no aliphatic unsaturated bonds; R⁶ is a hydrogen atom or an alkyl group having 1 to 3 carbon atoms; and d, e, f, g, and h are numbers that satisfy the conditions 0.10≦d≦0.80, 0≦e≦0.05, 0≦f≦0.80, 0≦g≦0.70, 0≦h≦0.05, with the proviso that 0.2^f + g and d + e + f + g = 1.)

In the present composition, R¹ preferably represents an alkynyl group expressed by the formula: 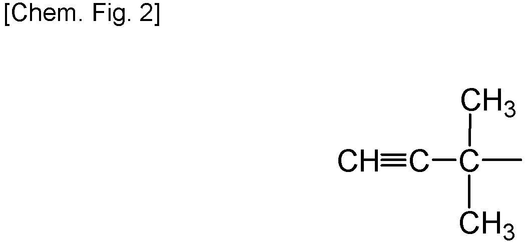 an alkynyl group expressed by the formula: 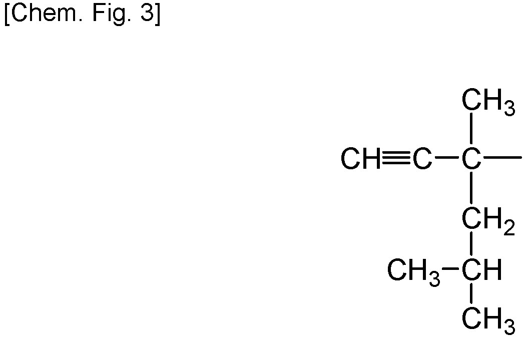 and an alkynyl group expressed by the formula:

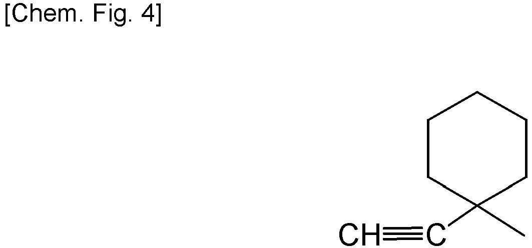

The present composition preferably further contains (E) a filler in an amount 100 to 3000 parts by mass per 100 parts by mass of component (A). In this case, the composition preferably further contains (F) a surface treatment agent in an amount of 0.05 to 10 parts by mass for 100 parts by mass of component (E).

The present composition preferably further contains (G) an adhesion promoter in an amount of 0.1 to 10 parts by weight per 100 parts by weight of component (A).

### EFFECT OF THE INVENTION

The curable silicone composition of the present invention is characterized in that when the organic solvent used in the preparation of the composition is removed, the hydrosilylation reaction inhibitor is prevented from being partially or completely removed along with the organic solvent, and when the composition is subjected to hot-melt mixing or hot molding, the hydrosilylation reaction inhibitor is prevented from partially or completely volatilizing, resulting in minimal change in curability and storage stability.

### DESCRIPTION OF THE PREFERRED EMBODIMENTS

### <Definitions of Terms>

In the present invention, the term "hot-melt type" refers to a material that is non-fluid at 25°C and softens or melts when heated. Herein, non-fluid refers to not flowing in a no-load state, for example, the state of being less than the softening point measured by the softening point testing method in the ball and ring method of hot-melt adhesives specified in "Testing methods for the softening point of hot-melt adhesives" of JIS K 6863-1994. The softening point is preferably 50°C or higher.

The curable silicone composition of the present invention will be explained in detail.
Component A is an organopolysiloxane resin having at least two aliphatic unsaturated monovalent hydrocarbon groups in one molecule, containing siloxane units expressed by the formula: RSiO_{3/2} and/or siloxane units expressed by the formula: SiO_{4/2}, in an amount of at least 20 mol % of all siloxane units constituting component (A). Examples of the aliphatic unsaturated monovalent hydrocarbon group in component (A) include vinyl groups, allyl groups, butynyl groups, pentenyl groups, hexenyl groups, heptenyl groups, and other alkenyl groups with 2 to 12 carbon atoms, but vinyl groups are preferred.

There are no limitations on the molecular structure of component (A), but the structure must be branched or resinous in order to contain siloxane units expressed by the formula RSiO_{3/2} and/or siloxane units expressed by the formula SiO_{4/2} in an amount of at least 20 mol% of all siloxane units constituting component (A). This type of component (A) is preferably an organopolysiloxane resin expressed by the average unit formula: (R⁴₃SiO_{1/2})_{d}(R⁵₂SiO_{2/2})ₑ(R⁵SiO_{3/2})_{f}(SiO_{4/2})_{g}(R⁶O_{1/2})ₕ

In the formula, each R⁴ is independently a monovalent hydrocarbon group having 1 to 12 carbon atoms. Specific examples include alkyl groups having 1 to 12 carbon atoms, such as methyl, ethyl, propyl, butyl, pentyl, hexyl, and heptyl groups; alkenyl groups having 2 to 12 carbon atoms, such as vinyl, allyl, butenyl, pentenyl, hexenyl, and heptenyl groups; aryl groups having 6 to 12 carbon atoms, such as phenyl, tolyl, and xylyl groups; and aralkyl groups having 7 to 12 carbon atoms, such as benzyl and phenethyl groups. Of these, methyl and vinyl groups are preferred. At least two of all R⁴s in one molecule are aliphatic unsaturated hydrocarbon groups, preferably alkenyl groups, and particularly preferably vinyl groups.

In the formula, each R⁵ is independently a monovalent hydrocarbon group having 1 to 12 carbon atoms and no aliphatic unsaturated bonds, and examples of such groups include the same alkyl groups, aryl groups, and aralkyl groups as described above, but a methyl group or a phenyl group is preferable.

In the formula, R⁶ is a hydrogen atom or an alkyl group having 1 to 3 carbon atoms, and examples of the alkyl group of R⁶ include methyl groups, ethyl groups, and propyl groups.

Furthermore, in the formula, "d" is a number indicating the ratio of siloxane units expressed by the general formula: R⁴₃SiO_{1/2} (hereinafter also referred to as "M units"), and is a number satisfying the condition 0.10 ≤ d ≤ 0.80. When d is equal to or less than the upper limit of the above range, the hardness of the resulting cured product at room temperature will be favorable. Furthermore, in the formula, "e" is a number indicating the ratio of siloxane units expressed by the general formula: R⁵₂SiO_{2/2} (hereinafter also referred to as "D units"), and is a number satisfying the condition 0 ≤ e ≤ 0.05. This is because when the value of "e" is less than or equal to the aforementioned upper limit, the hardness of the obtained cured product at room temperature is favorable. Furthermore, "f" is a number indicating the ratio of siloxane units expressed by the general formula: R⁵SiO_{3/2} (hereinafter also referred to as "T units"), and is a number satisfying the condition 0 ≤ f ≤ 0.80. This is because when the value of "f" is less than or equal to the upper limit of the aforementioned range, the mechanical strength of the obtained cured product is favorable. Furthermore, "g" is a number indicating the ratio of siloxane units expressed by the general formula: SiO_{4/2} (hereinafter also referred to as "Q units"), and is a number satisfying the condition 0 ≤ g ≤ 0.70. This is because when the value of "g" is less than or equal to the upper limit of the aforementioned range, the mechanical strength of the obtained cured product is favorable. Here, f + g is greater than or equal to 0.20. In other words, either T units or Q units are essential. Furthermore, "h" represents a number indicating the ratio of units expressed by the general formula: R⁶O_{1/2}, and is a number satisfying 0 ≤ h ≤ 0.05. This is because when the value of "h" is less than or equal to the aforementioned upper limit, the hardness of the obtained cured product at room temperature is favorable. In the formula, the sum of d, e, f, and g is 1.

Component (B) is an organopolysiloxane having at least two silicon-bonded hydrogen atoms per molecule. Furthermore, examples of groups bonded to the silicon atom other than hydrogen atoms in component (B) include alkyl groups having 1 to 12 carbon atoms such as methyl groups, ethyl groups, propyl groups, butyl groups, pentyl groups, hexyl groups, heptyl groups, and the like; aryl groups having 6 to 12 carbon atoms such as phenyl groups, tolyl groups, xylyl groups, and the like; aralkyl groups having 7 to 12 carbon atoms, such as benzyl groups, phenethyl groups, and the like, and methyl groups or phenyl groups are preferable. Furthermore, component (B) may have small amounts of hydroxyl groups or alkoxy groups having 1 to 3 carbon atoms, such as methoxy groups and ethoxy groups, bonded to silicon atoms, so long as the object of the present invention is not impaired.

There are no limitations on the molecular structure of component (B), and examples include linear, partially branched, branched, cyclic, and resinous. Examples of this component (B) include dimethylpolysiloxanes capped at both molecular terminals with dimethylhydrogensiloxy groups, copolymers of dimethylsiloxane and methyl hydrogen siloxane capped at both molecular terminals with trimethylsiloxy groups, copolymers of dimethylsiloxane and methyl hydrogen siloxane copolymer capped at both molecular terminals with dimethylhydrogensiloxy groups, dimethylpolysiloxane capped at both molecular terminals with dimethylhydrogensiloxy groups, methylhydrogenpolysiloxane capped at both molecular terminals with trimethylsiloxy groups, cyclic methylhydrogenpolysiloxane, cyclic methylhydrogensiloxane-dimethylsiloxane copolymer, copolymers containing a siloxane unit expressed by the formula: H(CH₃)₂SiO_{1/2} and a siloxane unit expressed by the formula: SiO_{4/2}, copolymers containing a siloxane unit expressed by the formula: H(CH₃)₂SiO_{1/2} and a siloxane unit expressed by the formula:CH₃SiO_{3/2}, copolymers containing a siloxane unit expressed by the formula: H(CH₃)₂SiO_{1/2} and a siloxane unit expressed by the formula: C₆H₅SiO_{3/2}, copolymers containing a siloxane unit expressed by the formula: (CH₃)₃SiO_{1/2}, a siloxane unit expressed by the formula: H(CH₃)₂SiO_{1/2}, and a siloxane unit expressed by the formula: SiO_{4/2}, copolymers containing a siloxane unit expressed by the formula: (CH₃)₃SiO_{1/2}, a siloxane unit expressed by the formula: H(CH₃)₂SiO_{1/2}, and a siloxane unit expressed by the formula: CH₃SiO_{3/2}, and copolymers containing a siloxane unit expressed by the formula: (CH₃)₃SiO_{1/2}, a siloxane unit expressed by the formula: H(CH₃)₂SiO_{1/2}, and a siloxane unit expressed by the formula: C₆H₅SiO_{3/2}. In particular, when fast curing properties are required for the present composition, component (B) is preferably a linear or branched organopolysiloxane having a siloxane unit represented by the following formula: HR⁷₂SiO_{1/2} (wherein each R⁷ is independently an alkyl group having 1 to 12 carbon atoms).

The amount of component (B) in the present composition is such that there are 0.1 to 20 moles of silicon-bonded hydrogen atoms in component (B) per mole of aliphatic unsaturated hydrocarbon groups in component (A), and preferably is an amount in a range of 0.5 to 10 moles, 0.5 to 5 moles, or 0.7 to 3 moles. This is because the present composition is satisfactorily cured if the content of the component (B) is not less than the lower limit of the above-mentioned range, and heat resistance of an obtained cured product is improved if the content of the component (B) is not more than the upper limit of the above-mentioned range.

The bis(alkynyloxysilyl)alkane of component (C) is expressed by the general formula:

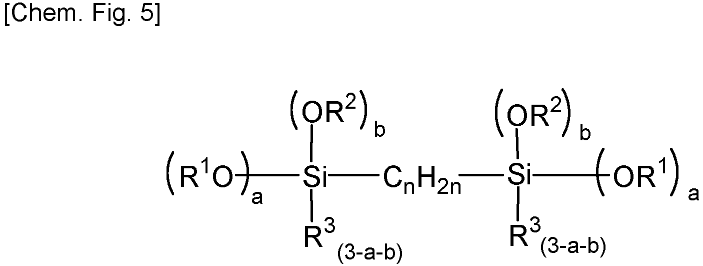

In the formula, R¹ is independently an alkynyl group having 5 to 12 carbon atoms, a linear or branched alkynyl group expressed by the formula: CₘH₂ₘ₋₃ (in the formula, m is an integer of 5 to 12), or an alkynyl group having a cyclic structure expressed by the formula: CₘH₂ₘ₋₅ (wherein m is the same as defined above), and is preferably a branched alkynyl group or an alkynyl group having a cyclic structure.

Specifically, if R¹ is a branched alkynyl expressed by formula: 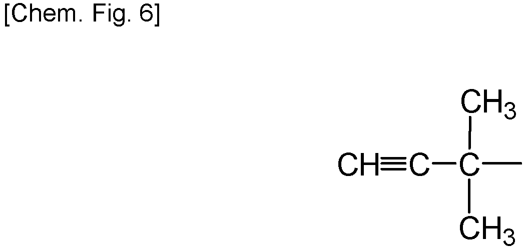 the bis(alkynyloxysilyl)alkane of component (C) is expressed by the general formula:

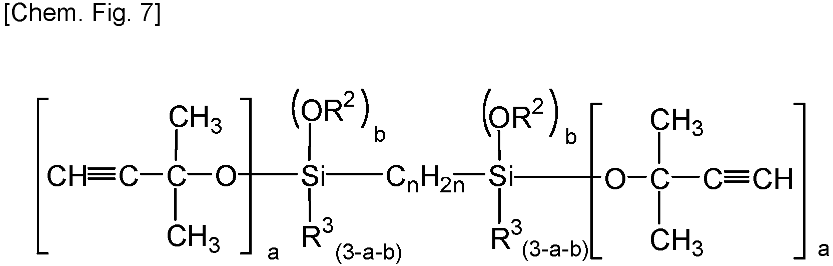

Furthermore, if R¹ is a branched alkynyl group expressed by 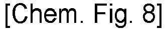 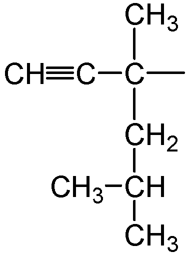 the bis(alkynyloxysilyl)alkane of component (C) is expressed by the general formula:

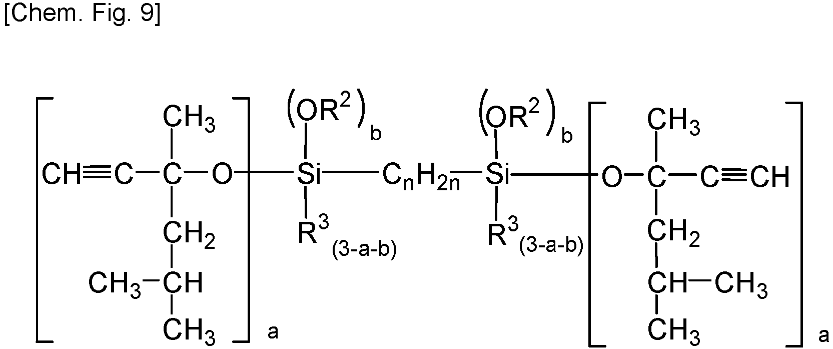

Furthermore, if R¹ is a branched alkynyl group expressed by 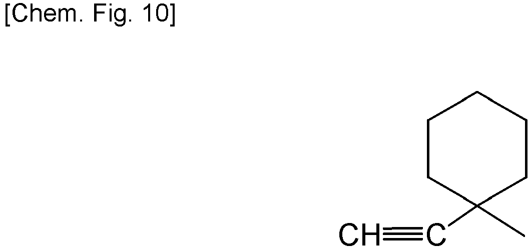 the bis(alkynyloxysilyl)alkane of component (C) is expressed by the general formula:

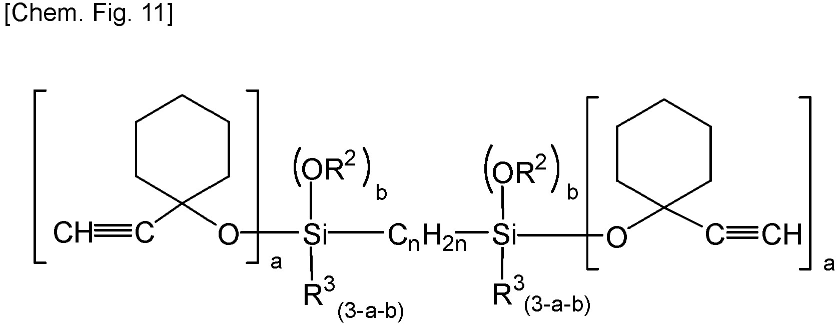

Furthermore, in the above formula, R² is independently an alkyl group having 1 to 3 carbon atoms or a hydrogen atom, and examples of the alkyl group of R² include methyl groups, ethyl groups, and propyl groups, and methyl groups are preferable.

Furthermore, in the above formula, R³ is independently an alkyl group having 1 to 3 carbon atoms, such as a methyl group, an ethyl group, or a propyl group, and is preferably a methyl group.

Furthermore, in the above formula, a is independently 1, 2, or 3, indicating the number of alkynyloxy groups bonded to silicon atoms at the molecular chain terminals. Furthermore, in the above formula, b is independently 0, 1, or 2, indicating the number of alkoxy groups or hydroxyl groups (silanol groups) bonded to silicon atoms at the molecular chain terminals. Note that in the above formula, a + b is 2 or 3. If the bis(alkynyloxysilyl)alkane of component (C) has at least one or two silicon-bonded alkoxy groups or hydroxyl groups (silanol groups) at the molecular chain terminals, or in other words, if at least one "b" in the above formula is 1 or 2, the adhesion of the composition can be improved.

Furthermore, in the above formula, n is an integer of 2 to 20, and preferably an integer of 6 to 20, or an integer of 6 to 10. This is because if the value of n is at least as great as the lower limit of the above range, the transparency of the resulting curable silicone composition is enhanced, whereas the value of n is at most the upper limit of the above range, the hydrosilylation reaction can be sufficiently suppressed even if a small amount is added to the curable silicone composition.

Examples of the bis(alkynyloxysilyl)alkane of component (C) include compounds expressed by the following formulas:

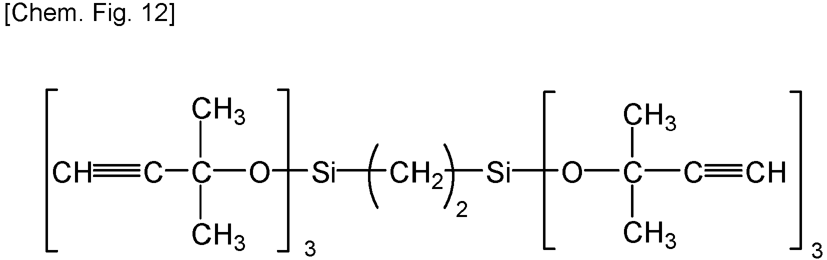

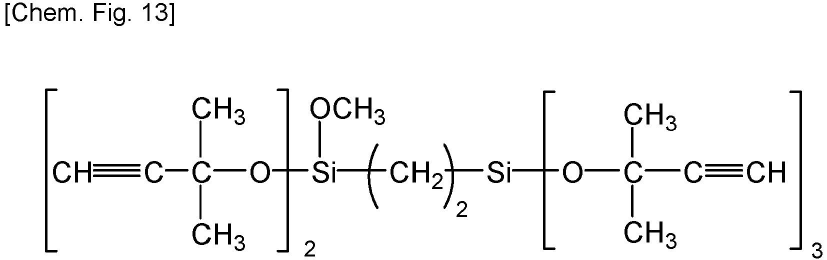

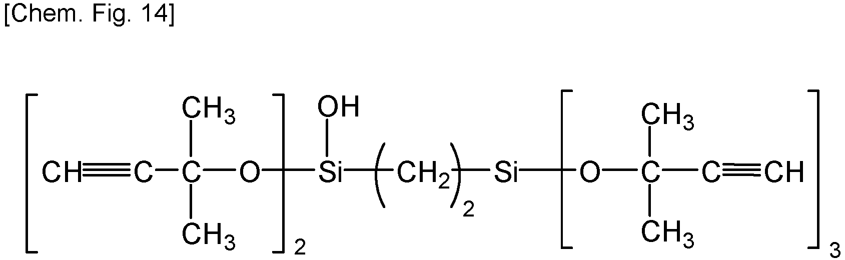

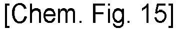

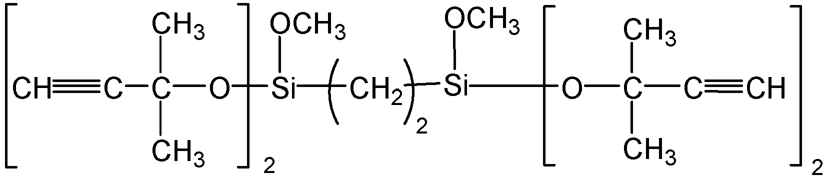

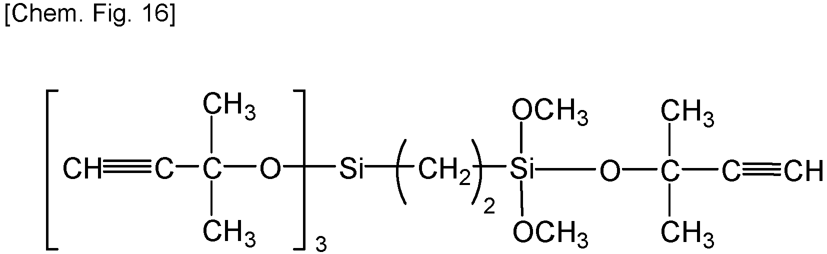

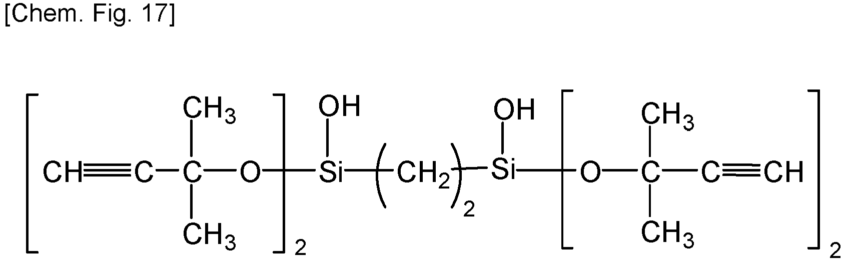

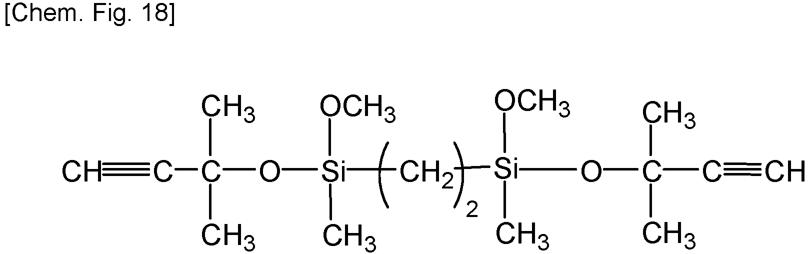

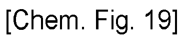

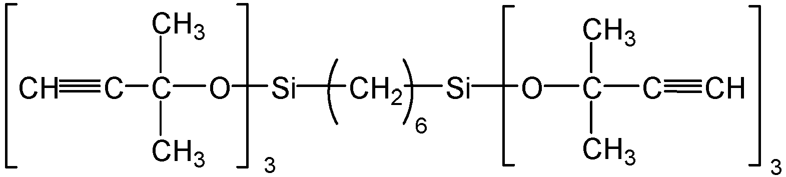

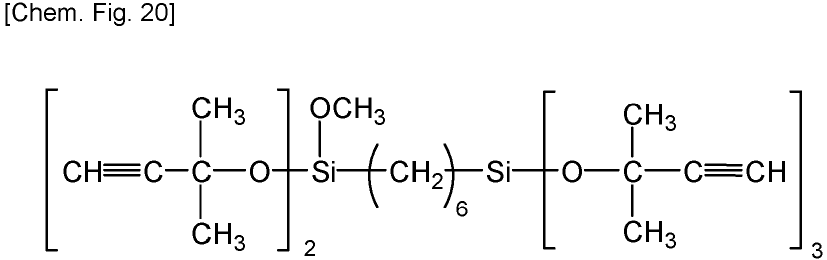

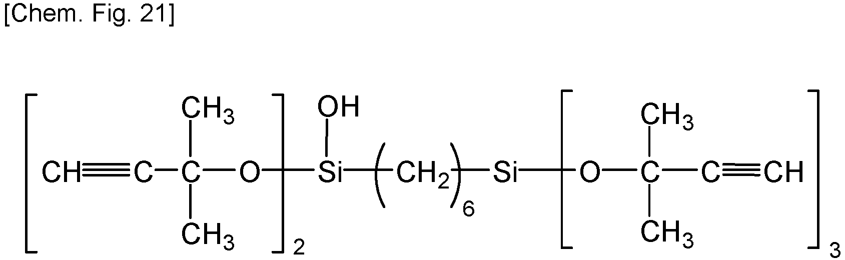

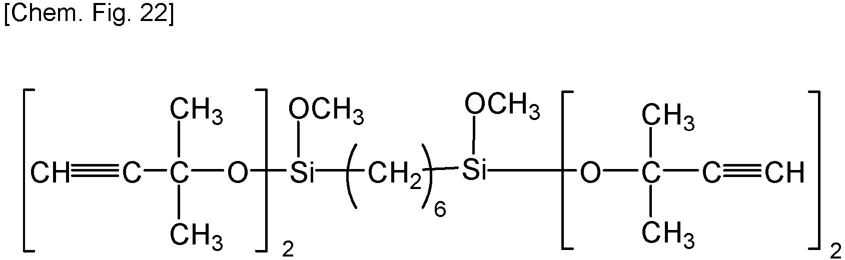

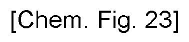

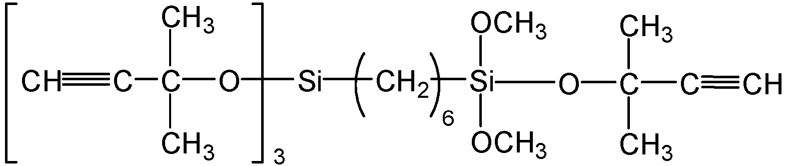

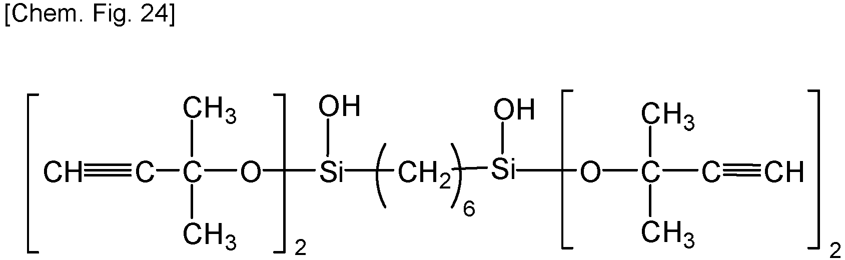

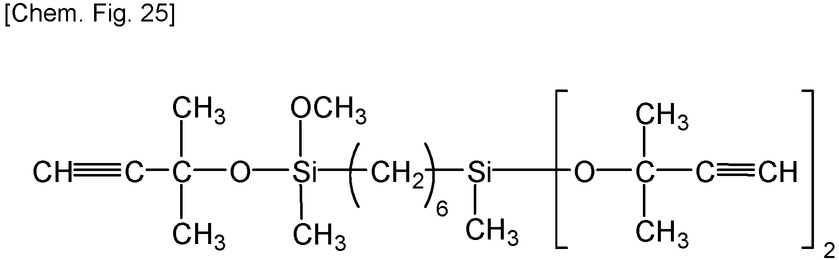

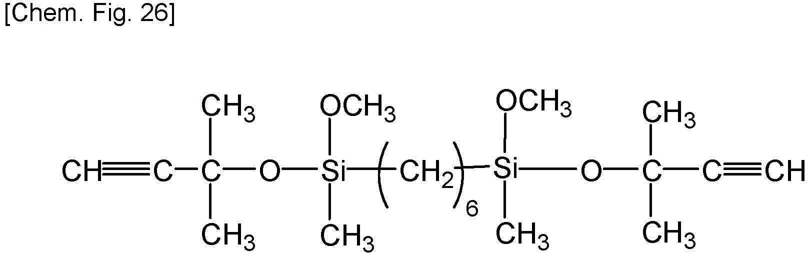

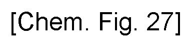

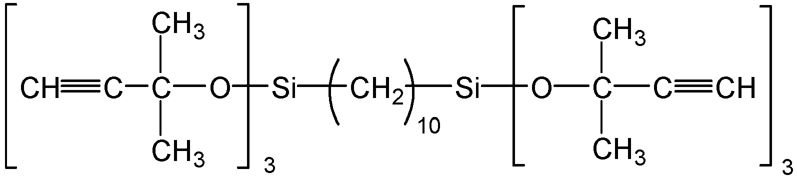

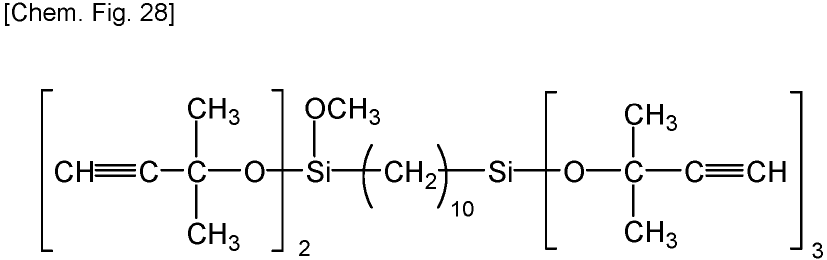

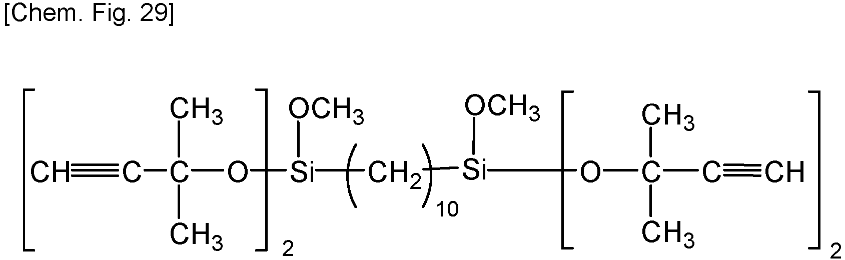

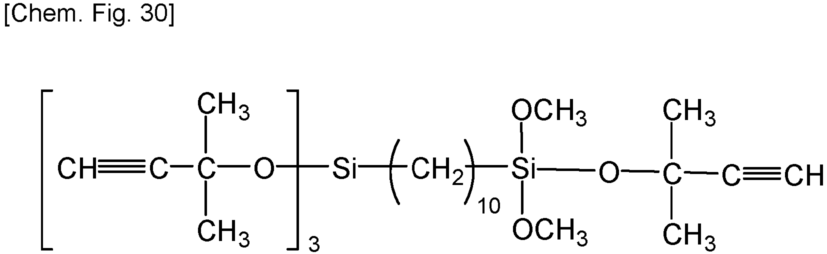

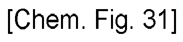

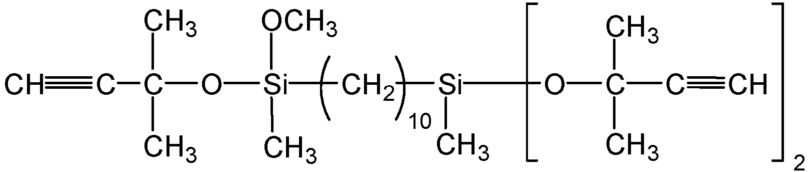

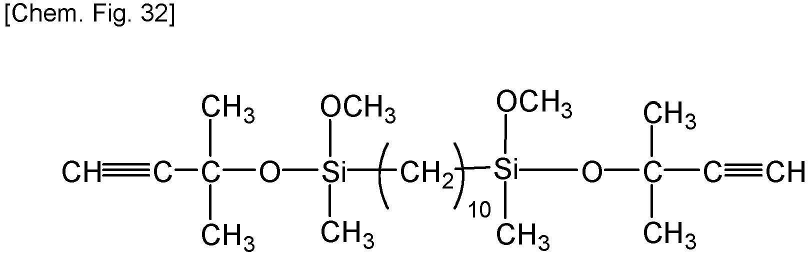

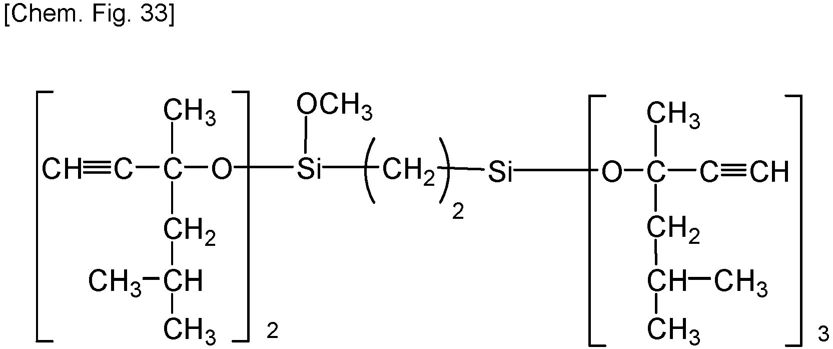

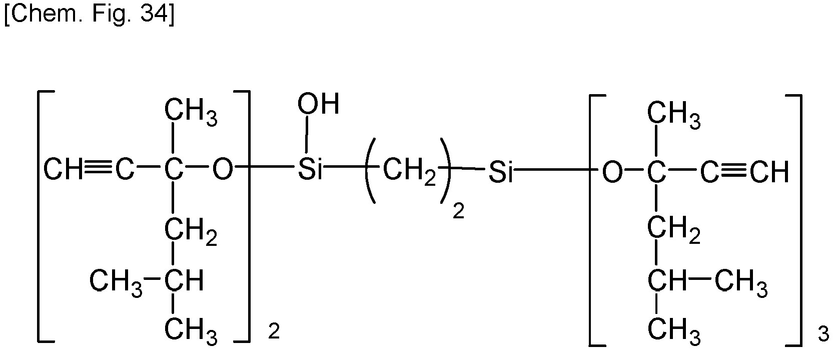

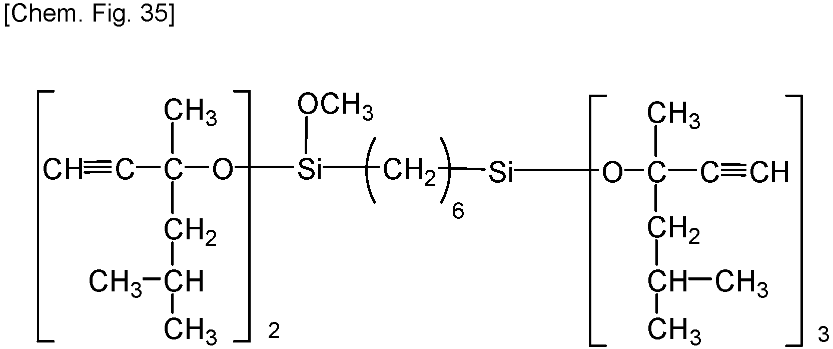

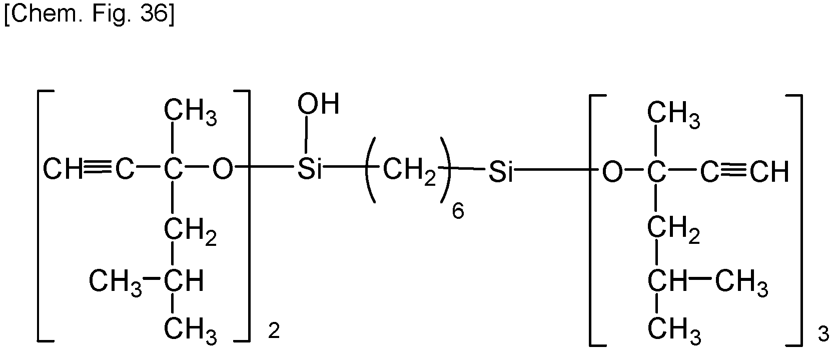

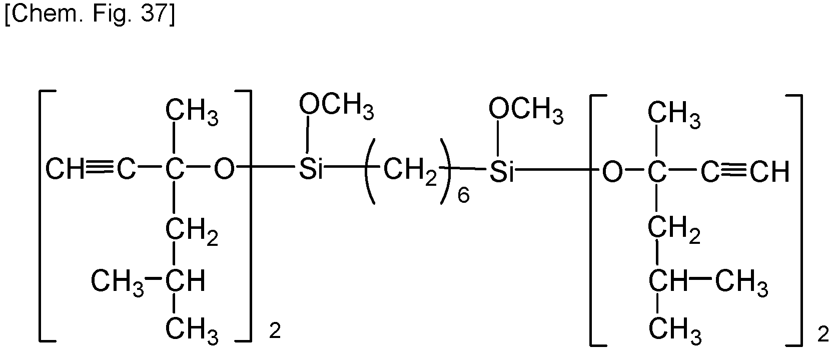

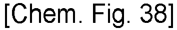

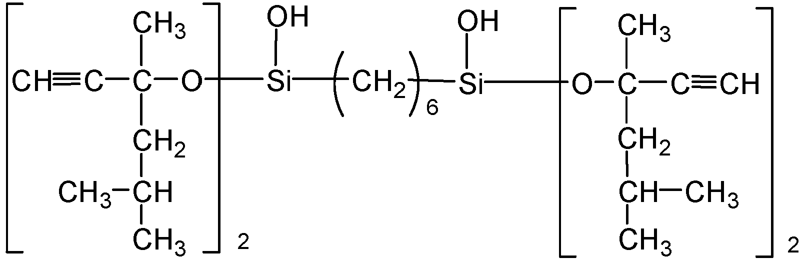

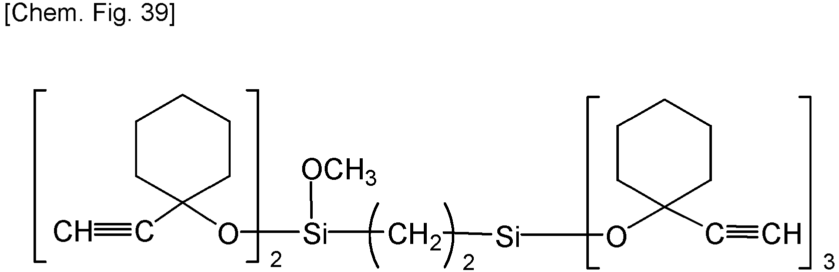

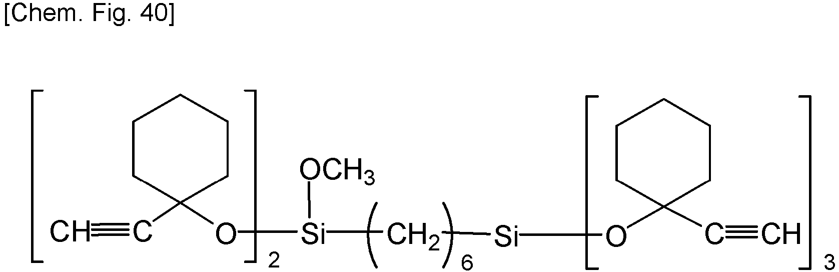

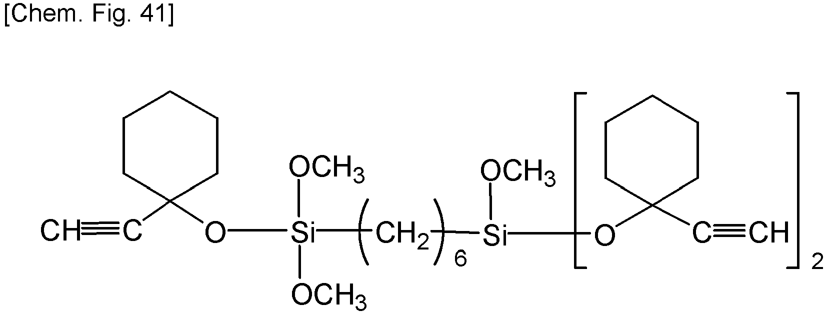

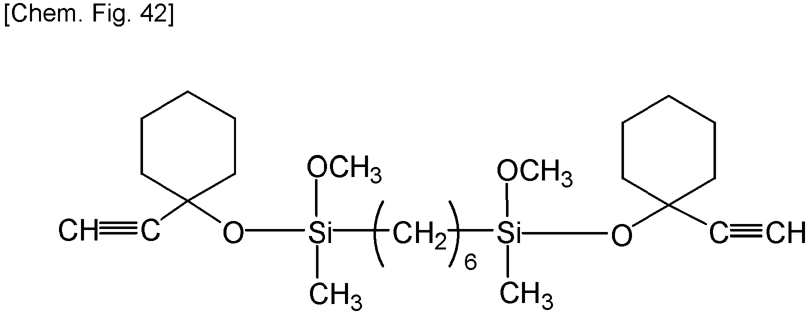

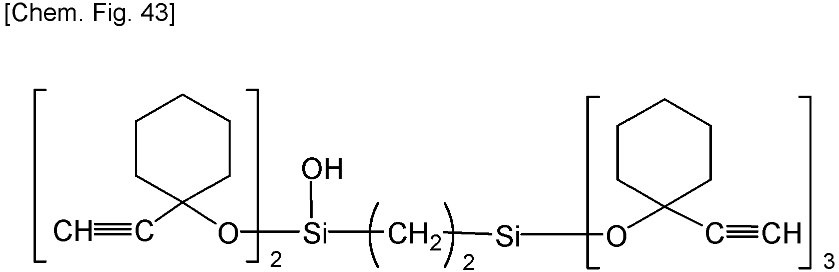

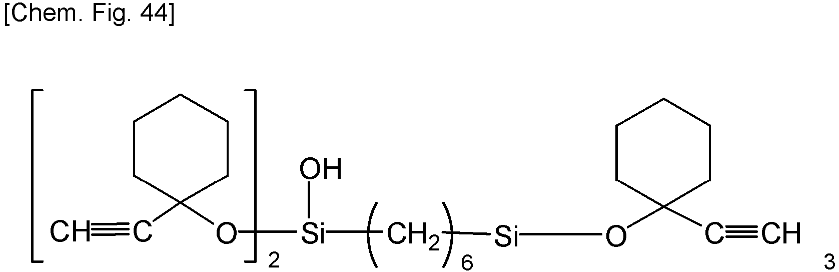

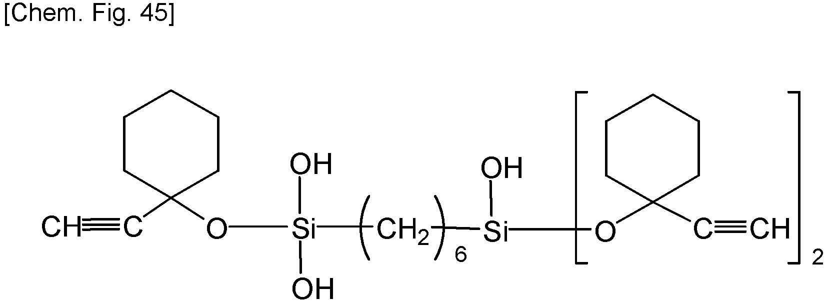

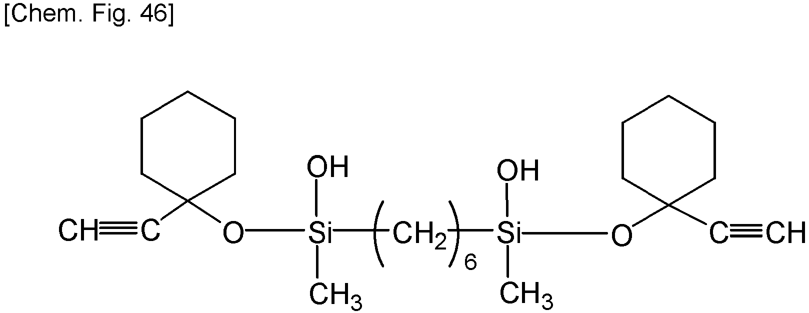

The method for producing the bis(alkynyloxysilyl)alkane of component (C) is characterized by subjecting a bis(halosilyl)alkane expressed by the general formula: 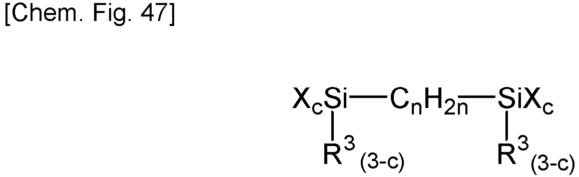 to a dehydrohalogenation condensation reaction with an alkynyl alcohol expressed by the formula:

R¹OH

and then reacting the condensation reaction product with water or an alkyl alcohol having 1 to 3 carbon atoms.

In the above bis(halosilyl)alkane, R³ in the above formula is independently an alkyl group having 1 to 3 carbon atoms, such as a methyl group, an ethyl group, or a propyl group, and is preferably a methyl group.

In the above bis(halosilyl)alkane, X in the above formula is independently a halogen atom, such as a chlorine atom, a bromine atom, or an iodine atom, and is preferably a chlorine atom.

Furthermore, in the above formula, c is independently 2 or 3, and is preferably 3.

Furthermore, in the above formula, n is an integer of 2 to 20, and preferably an integer of 6 to 20, or an integer of 6 to 10. This is because, if the value of n is at least the lower limit of the above range, the transparency of the composition will be enhanced when the resulting bis(alkynyloxysilyl)alkane is blended into a silicone composition. On the other hand, if the value of n is at most the upper limit of the above range, the hydrosilylation reaction can be sufficiently suppressed even if only a small amount of the resulting bis(alkynyloxysilyl)alkane is blended into the curable silicone composition.

The bis(halosilyl)alkane can be prepared, for example, by a method of a hydrosilylation reaction of a halosilane represented by the general formula:

HSiX_{c}R³_{(3-c)}

(where, R³ is an alkyl group having 1 to 3 carbon atoms, X is a halogen atom, and c is 2 or 3)
with a halosilane expressed by the general formula:

   SiX_{c}R³_{(3-c)}(CH₂)_{n"}-CH=CH₂

   (where R³ is an alkyl group having 1 to 3 carbon atoms, X is a halogen atom, c is 2 or 3, and n" is an integer from 0 to 18.),
   or by a method of a hydrosilylation reaction of a diene compound expressed by the general formula:

      CH₂=CH-(CH₂)_{n'}-CH=CH₂

      (where n' is an integer from 1 to 16)
      with a halosilane expressed by the general formula:

         HSiX_{c}R³_{(3-c)}

         (where R³ is an alkyl group having 1 to 3 carbon atoms, X is a halogen atom, and c is 2 or 3),
         as disclosed in Japanese Unexamined Patent Application Publication 2006-117532 (corresponding to the specification of U.S. Pat. No. 7,456,307).
In the above formula, R³ and X are the same as defined above.

In addition, in the above alkynyl alcohol, R¹ in the formula is an alkynyl group having 5 to 12 carbon atoms, and examples include linear or branched alkynyl alcohols expressed by the formula: CₘH₂ₘ₋₃OH (where m is an integer of 5 to 12), or alkynyl alcohols having a cyclic structure expressed by the formula: CₘH₂ₘ₋₅OH (where m is the same as defined above), and preferably is a branched alkynyl alcohol or alkynyl alcohol having a cyclic structure.

Specifically, examples of the alkynyl alcohol include branched alkynyl alcohols expressed by the formula: 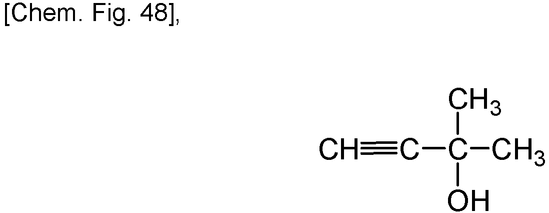 branched alkynyl alcohols expressed by the formula: 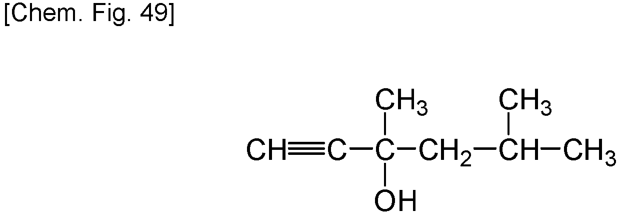 and alkynyl alcohols having a cyclic structure expressed by the formula:

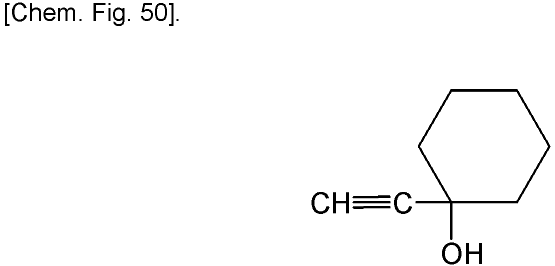

In the aforementioned production methods, the bis(alkynyloxysilyl)alkane of the present invention can be prepared by subjecting a bis(halosilyl)alkane and an alkynyl alcohol to a dehydrohalogenation condensation reaction. The amount of alkynyl alcohol added to the bis(halosilyl)alkane is preferably such that 1.0 to 5.0 moles, and more preferably 1.0 to 2.0 moles, of alkynyl alcohol are added per mole of halogen atoms bonded to silicon atoms in the bis(halosilyl)alkane.

The dehydrohalogenation condensation reaction is preferably carried out in the presence of a hydrogen halide scavenger, preferably triethylamine, pyridine, picoline, or diazabicycloundecene. The amount of the hydrogen halide scavenger is preferably 1.0 to 5.0 moles, more preferably 1.0 to 2.5 moles, per mole of halogen atoms bonded to silicon atoms in the bis(halosilyl)alkane.

The dehydrohalogenation condensation reaction is preferably carried out by adding the bis(halosilyl)alkane dropwise to a reaction vessel containing the alkynyl alcohol and the hydrogen halide promoter. Although the dehydrohalogenation reaction proceeds at room temperature, the reaction is preferably performed at the reflux temperature of the alkyl alcohol for 3 hours or longer.

In the above production method, the partial condensation reaction product obtained by the above dehydrohalogenation condensation reaction may further be reacted with water or an alkyl alcohol having 1 to 3 carbon atoms to replace the silicon-bonded halogen atoms remaining in the condensation reaction product with hydroxyl groups (silanol groups) or alkoxy groups, thereby preparing the bis(alkynyloxysilyl)alkane of the present invention. Examples of the alkyl alcohol include methanol, ethanol, and propanol, but methanol is preferable.

The bis(alkynyloxysilyl)alkane obtained by the aforementioned production method can be obtained as a mixture of bis(alkynyloxysilyl)alkane (1) expressed by the general formula: 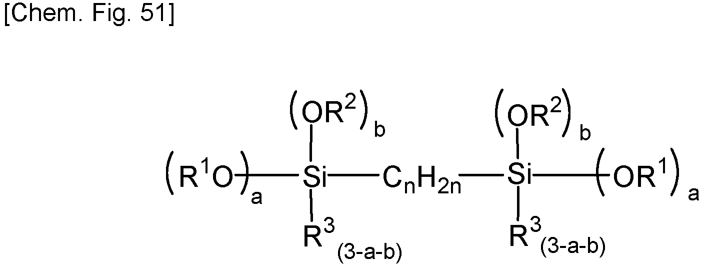 and bis(alkynyloxysilyl)alkane (2) expressed by the general formula: 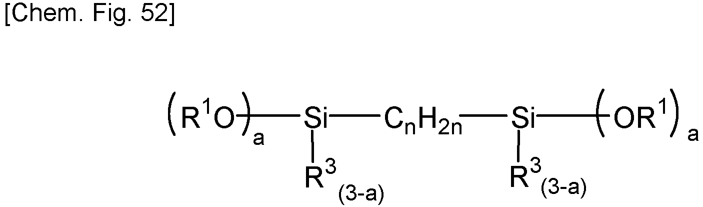 The proportion of the bis(alkynyloxysilyl)alkane (1) in the mixture is not particularly limited, but is preferably 1% or more, 5% or more, 10% or more, or 20% or more as determined by the area percentage method using an analysis chart for gas chromatography (hereinafter referred to as GC analysis chart).

In the present composition, the amount of component (C) is 10 to 5,000 ppm by mass, and preferably within a range of 10 to 1000 ppm, or within a range of 10 to 1000 ppm, based on the total amount of components (A) to (D). This is because if the amount of component (C) is equal to or greater than the lower limit of the above range, curing of the composition can be sufficiently suppressed, whereas if the amount is equal to or less than the upper limit of the above range, the curability of the resulting composition is not impaired. Furthermore, if component (C) contains a bis(alkynyloxysilyl)alkane having at least one or two silicon-bonded alkoxy groups or hydroxyl groups (silanol groups) at the molecular chain terminals, the amount of bis(alkynyloxysilyl)alkane is 10 to 5000 ppm by mass based on the combined amount of components (A) to (D), and is preferably within a range of 10 to 1000 ppm, or 10 to 500 ppm.

Component (D) is a platinum family metal-based hydrosilylation catalyst for promoting the hydrosilylation reaction between the monovalent hydrocarbon group having an aliphatic unsaturated bond in component (A) and the silicon-bonded hydrogen atoms in component (B). Examples of component (D) include platinum-based catalysts, rhodium-based catalysts, and palladium-based catalysts, but platinum-based catalysts are preferred because platinum-based catalysts are able to significantly accelerate curing of the composition. The platinum catalyst is well known, and examples thereof include platinum-alkenylsiloxane complexes; and high-energy beamactivated catalysts or light-activated catalysts such as (methylcyclopentadienyl)trimethyl platinum (IV), bis(2,4-pentanedionato) platinum (II), and bis(acetylacetonato) platinum (II). The alkenyl siloxane in the complex is not limited, but is preferably 1,3-divinyl-1,1,3,3-tetramethyldisiloxane. Furthermore, from the standpoint of improving the ease of handling and the pot life of the composition, component (D) may also be a platinum family metal-based hydrosilylation reaction catalyst in the form of fine particles in which the aforementioned catalyst is dispersed in or encapsulated by a thermoplastic resin. Examples of the thermoplastic resin include silicone resins, polycarbonate resins, and acrylic resins. As component (D), these platinum family metal hydrosilylation reaction catalysts may be used either individually or in combinations of two or more types.

The amount of component (D) is such that the amount of platinum-based metal is within a range of 0.01 to 1000 ppm by mass relative to the total amount of components (A) to (D), and is preferably within the range of 0.1 to 500 ppm, 5 to 500 ppm, 0.1 to 300 ppm, or 5 to 300 ppm. This is because, if the amount of component (D) is equal to or higher than the lower limit of the above range, curing of the composition is promoted, whereas, if the amount is equal to or lower than the upper limit of the above range, problems such as discoloration of the obtained cured product are unlikely to occur.

The present composition includes at least the above components (A) to (D), but may also include a filler (E) as an optional component, provided that the object of the present invention is not impaired. Examples of component (E) include inorganic fillers such as fused silica, ground silica, fumed silica, and alumina; as well as color pigments such as titanium oxide, carbon black, and the like. There are no particular limitations on the amount of component (E) in the present composition, but the amount is preferably within a range of 100 to 3000 parts by mass, 500 to 3000 parts by mass, or 1000 to 3000 parts by mass per 100 parts by mass of component (A).

Furthermore, if component (E) is blended in the present composition, a surface treatment agent (F) is preferably used in combination, in order to improve the dispersibility of component (E). Examples of component (F) include alkoxysilanes such as methyltrimethoxysilane, vinyltrimethoxysilane, vinyltriethoxysilane, 3-glycidoxypropyltrimethoxysilane, 3-methacryloxypropyltrimethoxysilane, 3-aminopropyltrimethoxysilane, 3-aminopropyltriethoxysilane, N-(2-aminoethyl)-3-aminopropyltrimethoxysilane, and the like; chlorosilanes such as methyltrichlorosilane, dimethyldichlorosilane, trimethylmonochlorosilane, and the like; silazanes such as hexamethyldichlorosilane, hexamethylcyclotrisilazane, and the like; siloxane oligomers such as dimethylsiloxane oligomers capped with silanol groups at both molecular chain terminals, dimethylsiloxane-methylvinylsiloxane copolymer oligomers capped with silanol groups at both molecular chain terminals, methylvinylsiloxane oligomers capped with silanol groups at both molecular chain terminals, and methylphenylsiloxane oligomers capped with silanol groups at both molecular chain terminals, and the like; and linear or branched polysiloxanes having at least one silicon-bonded alkoxy group in each molecule. There are no particular limitations on the amount of component (F) in the present composition, but the amount is preferably within a range of 0.05 to 10 parts by mass, 0.1 to 5 parts by mass, or 0.1 to 2 parts by mass per 100 parts by mass of component (E).

The composition may contain (G) an adhesion promoter as an optional component. Examples of component (G) include epoxy group-containing organoalkoxysilanes such as γ-glycidoxypropyltrimethoxysilane, β-(3,4-epoxycyclohexyl)ethyltrimethoxysilane, and the like; epoxy group-containing organopolysiloxanes such as epoxy group-containing organopolysiloxanes having a silicon-bonded vinyl group and an alkoxy group having 1 to 3 carbon atoms, epoxy group-containing organopolysiloxanes having a silicon-bonded hydrogen atom, epoxy group-containing organopolysiloxanes having a silicon-bonded hydrogen atom and an alkoxy group having 1 to 3 carbon atoms, and the like; silatrane derivatives having a silicon-bonded alkoxy group having 1 to 3 carbon atoms; and carbasilatrane derivatives having a silicon-bonded alkoxy group having 1 to 3 carbon atoms. There are no particular limitations on the amount of component (G) in the present composition, but the amount is preferably within a range of 0.1 to 10 parts by mass per 100 parts by mass of component (A).

Furthermore, the present composition may contain (H) a mold release agent, from the viewpoint of obtaining good releasability from a mold during molding. There are no particular limitations on component (H), and any conventionally known product can be used. Specific examples include carnauba wax, higher fatty acids such as montanic acid and stearic acid, higher fatty acid metal salts, fatty acid ester waxes, erythritol derivatives, and polyolefin waxes such as oxidized polyethylene, non-oxidized polyethylene, and the like. These release agents may be used alone or in a combination of two or more types. There are no particular limitations on the amount of component (H) in the present composition, but the amount is preferably within a range of 0.1 to 10 parts by mass per 100 parts by mass of component (A).

Furthermore, the present composition may contain, as other optional components, organopolysiloxanes other than components (A) and (B). These organopolysiloxanes are so-called non-reactive organopolysiloxanes that do not have aliphatic unsaturated groups or silicon-bonded hydrogen atoms in the molecule, and specific examples include dimethylpolysiloxanes blocked with trimethylsiloxy groups at both ends of the molecular chain, dimethylsiloxane-methylphenylsiloxane copolymers blocked with trimethylsiloxy groups at both ends of the molecular chain, dimethylpolysiloxanes blocked with dimethylhydroxysiloxy groups at both ends of the molecular chain, cyclic dimethylpolysiloxanes, copolymers containing siloxane units expressed by the formula:

(CH₃)₃SiO_{1/2}

and siloxane units expressed by the formula:

SiO_{4/2}

and copolymers consisting of siloxane units expressed by the formula (CH₃)₃SiO_{1/2}, siloxane units represented by the formula (CH₃)₂SiO_{2/2} and siloxane units represented by the formula SiO_{4/2}.

The composition is solid at room temperature but has "hot-melt properties" meaning that it softens and melts as the temperature rises. Therefore, during the production process, the composition is liquefied using an organic solvent, and then the organic solvent is removed by heating under reduced pressure, allowing the composition to be formed as powder, granules, pellets, or sheets. Furthermore, the composition can also be meltkneaded and then formed as powder, granules, pellets, or sheets. The composition can be prepared, for example, by melt-kneading components (A) through (D) and any other optional components at a temperature in a range of 50 to 150°C using a single- or twin-screw continuous mixer, a twin roller mixer, a Ross mixer, a kneader mixer, or the like.

### EXAMPLES

The curable silicone composition of the present invention will be described in further detail using examples. Note that the present invention is not limited to these examples.

### <Reference Example 1>

A 500 mL four-neck glass flask equipped with a stirrer, a reflux condenser, a thermometer, and a drip funnel was purged with nitrogen, and then 2-methyl-3-butyn-2-ol (62.96 g, 0.749 mol), toluene (100 g), and 4-methylpyridine (103.34 g, 1.110 mol) were added. Next, 1,6-bis(trichlorosilyl)hexane (37.58 g, 0.106 mol) was added dropwise from the drip funnel over 30 minutes. Thereafter, the mixture was reacted at the reflux temperature for 10 hours. Thereafter, methanol (3.569 g, 0.111 mol) was added by the drip funnel, and a reaction was further carried out at the reflux temperature. A large amount of water was added to the resulting reaction solution to dissolve the by-product salt, and then the organic layer was separated and washed five times with water. The low boiling point components were removed from the resulting organic layer by distillation under reduced pressure to obtain 39.06 g of a pale yellow liquid having a GC purity of 61.5%. The GC purity was calculated from the peak area of the main component in a GC analysis chart. Analysis of the pale yellow liquid by ¹³C-NMR and ²⁹Si-NMR revealed that the liquid was a mixture of 1-[tris(1,1-dimethyl-2-propynyloxy)silyl-6-[bis(1,1-dimethyl-2-propynyloxy)methoxysilyl]hexane expressed by the formula: 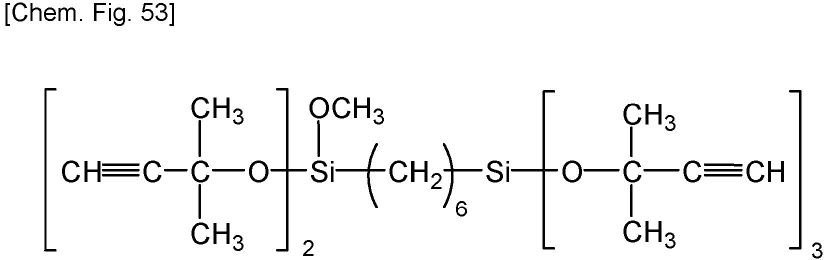 with a peak area ratio of 33% in the GC analysis chart, and 1,6-bis[tris(1,1-dimethyl-2-propynyloxy)silyl]hexane expressed by the formula: 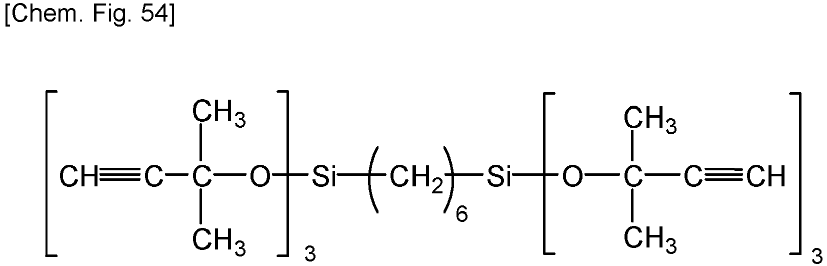 with a peak area ratio of 67% in the GC analysis chart.
The boiling point of the mixture was 300°C or higher.

### <Reference Example 2>

A 100 mL four-neck glass flask equipped with a stirrer, a reflux condenser, a thermometer, and a drip funnel was purged with nitrogen, and then 2-methyl-3-butyn-2-ol (3.42 g, 0.041 mol), toluene (20 g), and diazabicycloundecene (8.80 g, 0.058 mol) was added and mixed for 10 minutes. Next, 1,6-bis(trichlorosilyl)hexane (2.00 g, 0.0057 mol) was added dropwise from the drip funnel over 30 minutes, and then the mixture was reacted at reflux temperature for 3 hours. A large amount of water was added to the resulting reaction solution to dissolve the by-product salt, and then the organic layer was separated and washed five times with water. The low boiling point components were removed from the resulting organic layer by distillation under reduced pressure to obtain 1.63 g of a pale yellow liquid having a GC purity of 85.6%. The GC purity was calculated from the peak area of the main component in a GC analysis chart. Analysis of the pale yellow liquid by ¹³C-NMR and ²⁹Si-NMR revealed that the liquid was a mixture of 1-[tris(1,1-dimethyl-2-propynyloxy)silyl-6-[bis(1,1-dimethyl-2-butynoxy)hydroxysilyl]hexane expressed by the formula: 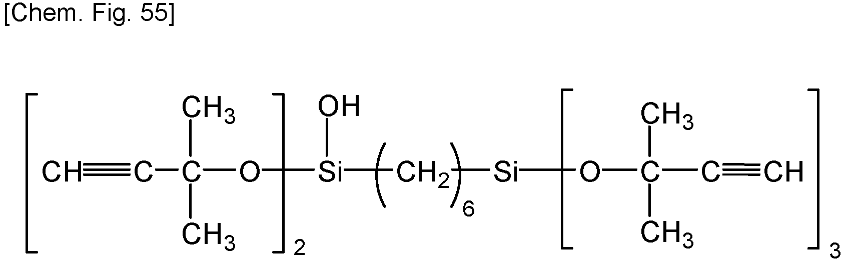 with a peak area ratio of 10% in the GC analysis chart, and 1,6-bis[tris(1,1-dimethyl-2-propynyloxy)silyl]hexane expressed by the formula: 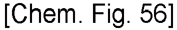 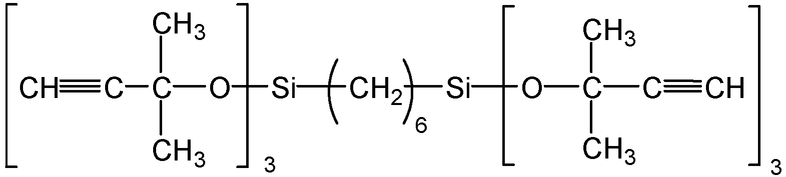 with a peak area ratio of 90% in the GC analysis chart.
The boiling point of the mixture was 300°C or higher.

### <Comparison of volatilization amount under hot forced air>

In order to confirm the volatility of the following samples under hot forced air, 1 g of each sample was weighed in an aluminum cup having a diameter of 5 cm, and dried in a hot air circulation oven under the conditions shown in Table 1, and the amount of volatilization (mass%) was measured. The results are shown in Table 1.
Sample 1: 1-ethynyl-cyclohexan-1-ol (boiling point = 174°C)
Sample 2: Tris[(1,1-dimethyl-2-propynyl)oxy]methylsilane (boiling point = 245°C)
Sample 3: Mixture prepared in Reference Example 1 (boiling point = 300°C or higher)

**[Table 1]**

| | Drying conditions | Volatilization amount (Mass%) |
|---|---|---|
| Sample 1 | 60°C, 2 hours | 100 |
| | 70°C, 2 hours | 100 |
| | 80°C, 2 hours | 100 |
| Sample 2 | 60°C, 2 hours | 87 |
| | 70°C, 2 hours | 100 |
| | 80°C, 2 hours | 100 |
| Sample 3 | 60°C, 2 hours | 0.26 |
| | 70°C, 2 hours | 0.32 |
| | 80°C, 2 hours | 0.35 |

From the results in Table 1, it was confirmed that the bis(alkynyloxysilyl)alkane prepared in Reference Example 1 has a significantly lower volatility in a hot air circulation oven than existing hydrosilylation reaction inhibitors such as 1-ethynyl-cyclohexan-1-ol and tris[(1,1-dimethyl-2-propynyl)oxy]methylsilane, and therefore has a higher vapor pressure at room temperature.

### <Examples 1 to 4, Comparative Examples 1 and 2>

A curable silicone composition was prepared according to the formulations shown in Table 2 using the following components.

The following organopolysiloxane was used as component (A).
(a1): Organopolysiloxane expressed by the average unit formula:

   [(CH₂=CH)(CH₃)₂SiO_{1/2}]_{0.20}(C₆H₅SiO_{3/2})_{0.80}
(a2): Organopolysiloxane expressed by the average unit formula:

   [(CH₂=CH)(CH₃)₂SiO_{1/2}]_{0.75}(C₆H₅SiO_{3/2})_{0.25}
(a3): Organopolysiloxane expressed by the average unit formula:

   [(CH₂=CH)(CH₃)₂SiO_{1/2}]_{0.55}(CH₃)₃SiO_{1/2})_{0.05}(SiO_{4/2})_{0.40}

The following organopolysiloxane was used as component (B).
(b1): Organopolysiloxane expressed by the average unit formula:

   [H(CH₃)₂)SiO_{1/2}]_{0.6}(C₆H₅SiO_{3/2})_{0.4}
(b2): Organosiloxane expressed by the formula:

   H(CH₃)₂SiO(C₆H₅)₂SiOSi(CH₃)₂H

The following compounds were used as component (C) and for comparison.
(c1): Tris[(1,1-dimethyl-2-propynyl)oxy]methylsilane
(c2): Mixture prepared in Reference Example 1
(c3): Mixture prepared in Reference Example 2

The following catalyst was used as component (D).
(d1): A thermoplastic polycarbonate resin containing 4000 ppm of a 1,3-divinyl-1,1,3,3-tetramethyldisiloxane complex of Pt (0 valence) as the platinum amount (softening point = 150°C)

The following filler was used as component (E).
(e1): Fused silica with an average particle size of 14.5 µm (S6105P manufactured by Nippon Steel Materials Micron)
(e2): Fused silica with an average particle size of 0.7 µm (SPH507M manufactured by Nippon Steel Materials Micron)
(e3): Denka Black Press product (manufactured by Denka Co., Ltd.)

The following products were used as component (F).
(f1): Organopolysiloxane expressed by the formula:

(CH₂=CH)(CH₃)₂SiO[(CH₃)₂SiO]₂₉SiO(OCH₃)₃

The following products were used as component (G).
(g1): Bis(trimethoxysilylpropoxymethyl)allylsilatran expressed by the formula:

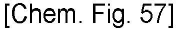

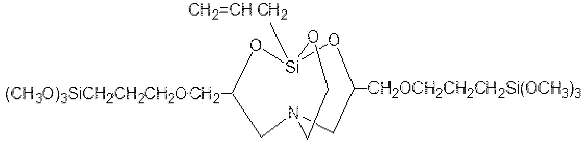

The following products were used as component (H).
(h1): Calcium stearate (melting point 147-149°C)

### <Curing characteristics>

The curable silicone composition was vulcanized for 600 seconds at 180°C using a vulcanization tester (product name: PREMIER MDR manufactured by Alpha Technologies) in accordance with a method specified in JIS K 6300-2:2001 "Unvulcanized Rubber - Physical Properties - Part 2: Determination of Vulcanization Characteristics Using a Vibratory Vulcanization Tester" to measure the curing properties. Note that the measurement was performed by weighing a mass of approximately 5 g of the curable silicone composition, interposing between 50 µm-thick PET films, placing on a lower die, and closing the upper die before initiating measurement. In addition, measurements were performed using an R-type rubber die with an amplitude angle of 0.53°, a vibration frequency of 100 cycles/min, and a maximum torque range of 230 kgf • cm, and the time (TS-1) required for the torque value to exceed 1 dNm was measured in units of seconds.

### <Softening point>

The curable silicone composition was molded into cylindrical pellets of ϕ14 mm x 22 mm. The pellet was placed on a hot plate set at 25°C to 100°C and continuously pressed from above for 10 seconds by a load of 100 grams, and after the load was removed, the amount of deformation of the pellet was measured. The temperature at which the deformation amount in the height direction was 1 mm or more was defined as the softening point.

### <Storage stability>

The curable silicone compositions were aged in an oven at 40°C and removed after 7, 14, 21, 30, and 50 days to confirm whether melting and crushing could be performed at a temperature of 100°C. The point at which crushing was no longer possible was deemed to be gelation.

### <Preparation of Curable Silicone Composition>

Curable silicone compositions containing the components listed in Table 2 were prepared as follows.

Components (E), (H), and (F) were placed in a small pulverizer and stirred at 100°C for 1 minute to subject the fused silica to a surface treatment. The temperature of the pulverizer was then returned to 25°C. Next, components (A), (B), and (C) were mixed in advance and liquefied, and added with components (D) and (G) to the small pulverizer. The mixture was stirred at room temperature (25°C) for one minute to prepare a uniform, granular black curable silicone composition.

Next, the granular curable silicone composition obtained was introduced into a kneader mixer set to 90°C and melt kneaded for 3 minutes to obtain an integrated composition that was solid at room temperature. An irregular granular curable silicone composition was prepared by pulverizing this solid fraction while cooling to 0°C. The softening point, hardening characteristics before and after melt kneading, and storage stability at 40°C of each composition are presented in Table 2.

**[Table 2]**

| | | | Examples | | | | Comparative Examples | |
|---|---|---|---|---|---|---|---|---|
| | | | 1 | 2 | 3 | 4 | 1 | 2 |
| Composition of curable silicone composition (parts by mass) | (A) | (a1) | 57.2 | 57.2 | 57.2 | 57.2 | 57.2 | 57.2 |
| | | (a2) | 5.7 | 5.7 | 0 | 0 | 5.7 | 0 |
| | | (a3) | 0 | 0 | 5.7 | 5.7 | 0 | 5.7 |
| | (B) | (b1) | 22.3 | 22.3 | 22.3 | 22.3 | 22.3 | 22.3 |
| | | (b2) | 2.9 | 2.9 | 2.9 | 2.9 | 2.9 | 2.9 |
| | (C) | (c1) | 0 | 0 | 0 | 0 | 0.05 | 0.05 |
| | | (c2) | 0.05 | 0 | 0.05 | 0 | 0 | 0 |
| | | (c3) | 0 | 0.05 | 0 | 0.05 | 0 | 0 |
| | (D) | (d1) | Amount such that platinum atoms are 10 ppm by mass relative to the total amount of components (A) to (D) | | | | | |
| | (E) | (e1) | 1394 | 1394 | 1394 | 1394 | 1394 | 1394 |
| | | (e2) | 155 | 155 | 155 | 155 | 155 | 155 |
| | | (e3) | 1.7 | 1.7 | 1.7 | 1.7 | 1.7 | 1.7 |
| | (F) | (f1) | 5.7 | 5.7 | 5.7 | 5.7 | 5.7 | 5.7 |
| | (G) | (g1) | 5.7 | 5.7 | 5.7 | 5.7 | 5.7 | 5.7 |
| | (H) | (h1) | 1.7 | 1.7 | 1.7 | 1.7 | 1.7 | 1.7 |
| Softening point (°C) | | | 85 | 85 | 90 | 90 | 85 | 90 |
| TS-1 (seconds) | Before melt mixing | | 68 | 75 | 70 | 74 | 85 | 90 |
| | After melt mixing | | 71 | 73 | 74 | 72 | 65 | 63 |
| Storage stability at 40°C (days) | | | >50 | >50 | >50 | >50 | 14 | 14 |

The results in Table 2 show that the curable silicone compositions of Examples 1 to 4 and Comparative Examples 1 and 2 all exhibit softening points of 80°C or higher and therefore have hot-melt properties. Furthermore, the step of forming the granules involved a melt-kneading process in which the composition was exposed to heat and shear forces, so the hydrosilylation reaction inhibitor volatilized in the curable silicone compositions that contained a typical hydrosilylation reaction inhibitor (Comparative Examples 1 and 2), impeding the ability to ensure the storage stability of the resulting curable silicone composition. In contrast, the curable silicone compositions of the present invention (Examples 1 to 4) were found to be free of such problems.

### INDUSTRIAL APPLICABILITY

The curable silicone composition of the present invention is preferable as a granular or sheet-like hot-melt curable silicone composition because a portion or all of the hydrosilylation reaction inhibitor is prevented from being removed along with the organic solvent used in the preparation, and a portion or all of the hydrosilylation reaction inhibitor is prevented from volatilizing when the composition is hot-melt mixed or thermoformed.

## Claims

1. A curable silicone composition, comprising at least:
(A) an organopolysiloxane resin having at least two aliphatic unsaturated monovalent hydrocarbon groups in one molecule, containing siloxane units expressed by the formula: RSiO_{3/2} (where R is a monovalent hydrocarbon group which may or may not contain an aliphatic unsaturated group) and/or siloxane units expressed by the formula: SiO_{4/2}, in an amount of at least 20 mol % of all siloxane units constituting component (A);
(B) an organopolysiloxane having at least two silicon atom-bonded hydrogen atoms in a molecule;
(C) a bis(alkynyloxysilyl)alkane containing repeating units expressed by the general formula: 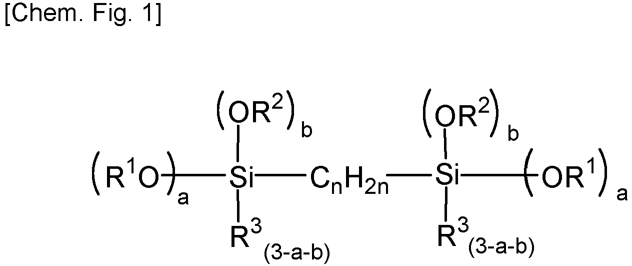 (In the formula, R¹ is independently an alkynyl group having 5 to 12 carbon atoms, R² is independently an alkyl group having 1 to 3 carbon atoms or a hydrogen atom, R³ is independently an alkyl group having 1 to 3 carbon atoms, a is independently 1, 2, or 3, b is independently 0, 1, or 2, and a + b is 2 or 3, and n is an integer from 2 to 20);
and
(D) a platinum group metal-based hydrosilylation catalyst;
the amount of component (B) is such that there are 0.1 to 20 moles of silicon-bonded hydrogen atoms in component (B) per mole of aliphatic unsaturated hydrocarbon groups in component (A); the amount of component (C) is 10 to 5,000 ppm by mass relative to the combined amount of components (A) through (D); and the amount of component (D) is such that the amount of platinum-based metal is 0.01 to 1,000 ppm by mass relative to the combined amount of components (A) through (D).

2. The curable silicone composition according to claim 1, wherein component (A) is an organopolysiloxane resin expressed by the average unit formula:
(R⁴₃SiO_{1/2})_{d}(R⁵₂SiO_{2/2})ₑ(R⁵SiO_{3/2})_{f}(SiO_{4/2})_{g}(R⁶O_{1/2})ₕ
(In the formula, each R⁴ is independently a monovalent hydrocarbon group having 1 to 12 carbon atoms, with the proviso that at least two of all R⁴s in one molecule are aliphatic unsaturated hydrocarbon groups, each R⁵ is independently a monovalent hydrocarbon group having 1 to 12 carbon atoms and having no aliphatic unsaturated bonds; R⁶ is a hydrogen atom or an alkyl group having 1 to 3 carbon atoms; and d, e, f, g, and h are numbers that satisfy the conditions 0.10≦d≦0.80, 0≦e≦0.05, 0≦f≦0.80, 0≦g≦0.70, 0≦h≦0.05, with the proviso that 0.2^f + g and d + e + f + g = 1.)

3. The curable silicone composition according to claim 1, wherein in component (C), R¹ is an alkynyl group expressed by the formula: 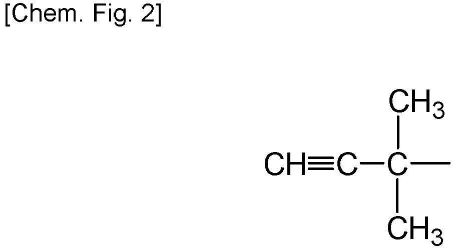 an alkynyl group expressed by the formula: 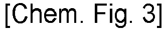 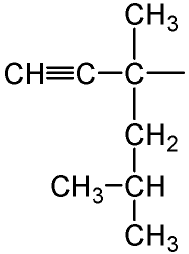 or an alkynyl group expressed by the formula:

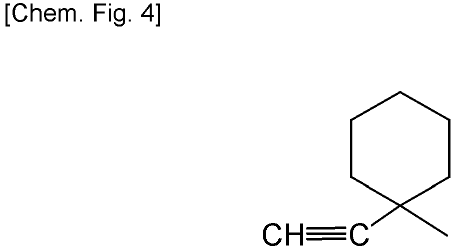

4. The curable silicone composition according to claim 1, further comprising: (E) a filler, in an amount of 100 to 3000 parts by mass per 100 parts by mass of component (A).

5. The curable silicone composition according to claim 4, further comprising: (F) a surface treatment agent, in an amount of 0.05 to 10 parts by mass per 100 parts by mass of component (E).

6. The curable silicone composition according to claim 1, further comprising: (G) an adhesion promoter, in an amount of 0.1 to 10 parts by mass per 100 parts by mass of component (A).
